Europäisches Patentamt

European Patent Office

Office européen des brevets

(11) Veröffentlichungsnummer: **0 008 419**
**B1**

(12) **EUROPÄISCHE PATENTSCHRIFT**

(45) Veröffentlichungstag der Patentschrift: 01.09.82

(51) Int. Cl.³: **C 08 G 63/48, C 09 D 3/64**

(21) Anmeldenummer: **79102896.2**

(22) Anmeldetag: **10.08.79**

(54) Verfahren zur Herstellung von Alkydharzen, die Epsilon-Caprolactamreste enthalten; die erhaltenen Harze und ihre Verwendung als wasserverdünnbare Bindemittel für Malerlacke.

(30) Priorität: **22.08.78 DE 2836611**

(43) Veröffentlichungstag der Anmeldung:
**05.03.80 Patentblatt 80/5**

(45) Bekanntmachung des Hinweises auf die Patenterteilung:
**01.09.82 Patentblatt 82/35**

(84) Benannte Vertragsstaaten:
**AT DE FR GB IT NL**

(56) Entgegenhaltungen:
**DE - A - 914 066**
**US - A - 1 327 928**
**US - A - 2 009 432**

**CHEMICAL ABSTRACTS, vol. 85, Nr. 22, 29, November 1976, Zusammenfassung 161974r. Seite 102. Columbus, Ohio, USA SCHOEPS JOCHEN "Epsilon-Caprolactam as a reactive thinner in water-dilutable enamels" Chem. Zentralblatt (1965). No. 44—2576.**

(73) Patentinhaber: **BAYER AG**
**Zentralbereich Patente, Marken und Lizenzen**
**D-5090 Leverkusen 1, Bayerwerk (DE)**

(72) Erfinder: **Traenckner, Hans-Joachim, Dr.**
**Wedelstrasse 46**
**D-4150 Krefeld 1 (DE)**
Erfinder: **Schoeps, Jochen, Dr.**
**Windmühlenstrasse 126**
**D-4150 Krefeld 1 (DE)**
Erfinder: **Küchenmeister, Rolf, Dr.**
**Drei-Königenstrasse 119**
**D-4150 Krefeld (DE)**
Erfinder: **Kuhnert, Hans-Ulrich**
**Hauptstrasse 4**
**D-3141 Westergellersen (DE)**

Courier Press, Leamington Spa, England.

### Verfahren zur Herstellung von Alkydharzen, die Epsilon-Caprolactamreste enthalten; die erhaltenen Harze und ihre Verwendung als wasserverdünnbare Bindemittel für Malerlacke

Die Erfindung betrifft Caprolactam-modifizierte Alkydharze, die sich hervorragend als Bindemittel für wasserlösliche Malerlacke eignen.

Wasser als das billigste und ungefährlichste aller Lösungsmittel hat wasserverdünnbare Lackrohstoffe schon immer attraktiv erscheinin lassen. Alkydharze, die durch Neutralisation freier Carboxylgruppen mit Alkalien, Ammoniak oder Aminen wasserlöslich gemacht worden sind, werden seit Jahren zu wasserverdünnbaren Überzugsmitteln verarbeitet, die insbesondere auf dem Sektor industrieller Lackierung von Eisen- und Stahlteilen einen bemerkenswert hohen Anteil errungen haben. Bei diesen Alkydharzen handelt es sich—je nach Verwendungsweck der daraus hergestellten Überzugsmittel—um kurz—bis mettelölige Typen, die mit Aminoplasten thermisch (Einbrennlacke) oder katalytisch (lufttrocknende Lacke) vernetzt werden.

Diese Vernetzungsreaktion erlaubt es, relativ niedermolekulare Alkydharze zu verwenden; sie können mit Dicarbonsäureanhydriden "aufgesäuert" werden, ohne daß dadurch merkliche Verluste an Reaktivität, Wasser- und Lösungsmittelfestigkeit bewirkt werden. Diese Umsetzung mit Dicarbonsäureanhydriden erfolgt in der Regel so, daß man kurz- oder mittelölige Alkydharze mit einem hohen Gehalt an OH-Gruppen (OH-Zahl: 70—100) herstellt und diese OH-Gruppen anschließend mit Carbonsäureanhydriden so weit aufsäuert, daß eine Säurezahl zwischen 56 und 112 erreicht wird (Wagner/Sarx, Lackkunstharze, Carl Hanser Verlag, München 1971, S. 123). Eine Neutralisation dieser freien Carboxylgruppen führt dann zur Wasserlöslichkeit der Alkydharze.

Langölige oder fette Alkydharze mit einem Ölgehalt von mehr als 55% für Maler- und Bautenlacke Konnten bislang nicht in ausreichend wasserlöslicher Form hergestellt werden.

Dieses Problem war deshalb als besonders schwierig betrachtet worden, weil lufttrocknende Anstrichmittel wegen des hohen Ölgehaltes zwangsweise einen hohen Anteil monofunktioneller Fettsäuren enthalten. Um dennoch einen ausreichend hohen Kondensationsgrad zu erzielen, verwendet man als Alkoholkomponente drei- und vierwertige Polyole und kondensiert außerdem so weit, daß die Säurezahl unter 25 und die OH-Zahl unter 50 sind. Die Möglichkeit eines wirksamen Aufsäuerns mit Carbonsäure anhydriden und anschließender Neutralisation bleibt somit ausgeschlossen. Bricht man jedoch die Polykondensation der Alkydharze vorzeitig ab, um so die für die Neutralisation notwendigen Gruppen zu erhalten, dann besitzen die daraus hergestellten Malerlacke nicht mehr die erforderlich schnelle An- und Durchtrocknung. Diese Schwierigkeiten standen einer generellen Einführung wasserlöslicher Alkydharze als Bindemittel für Malerlacke bisher im Wege.

Aus Chem. Abstracts 85, 161 974r ist die Verwendung von Caprolactam als Reaktivverdünner für Einbrennlacke aus Alkydharzen und Melaminharzen bekannt. Zu diesem System wird Caprolactam als Hilfslösungsmittel zugesetzt und wird während des Einbrennvorgangs — also bei großer Hitzeim wesentlichen durch Reaktion mit dem Melaminharz (vgl. M. Patheiger et al., Kongreßbuch des 13. Fatipec-Kongresses 1976, 57 ff.).

Bestandteil des gehärteten Lackfilms. Da also sowohl die Anwesenheit von Melaminharz als auch die durch Einbrennen erreichten Temperaturen für den wirksamen Einbau des Reaktivverdünners notwendig sind, konnte der genannten Literaturstelle kein Hinweis entnommen werden, wonach in langölige, d. h. lufttrocknende Alkydharze eingebautes Caprolactam in Abwesenheit von Melaminharzen irgendeinen vorteilhaften Effekt bewirken könnte, zumal da der bloße Zusatz von Caprolactam zu wäßrigen langöligen Alkydharzen keine merkliche Verbesserung der Wasserlöslichkeit ergibt.

Überraschenderweise wurde jetzt gefunden, daß wasserverdünnbare Alkydharze mit einer Öllänge von 55 bis 70% die beschriebenen negativen Eigenschaften nicht besitzen, wenn während der Herstellung des Alkydharzes ε-Caprolactam mit einkondensiert wird, wobei dann durch diesen Vorgang die Wasserlöslichkeit des Alkyds erzielt wird. Dabei muß die Temperatur selbstverständlich so hoch gewählt werden, daß eine "Verkochung", d.h. eine Umsetzung des ε-Caprolactams, mit dem Alkydharz gewährleistet ist.

Gegenstand der Erfindung ist also ein wasserverdünnbares Alkydharz mit einer Öllänge von 55 bis 70%, dadurch gekennzeichnet, daß das Alkydharz 3—20 Gew.-%, bezogen auf Alkydharz, einkondensierte ε-Caprolactamreste enthält.

Ein weiterer Gegenstand der Erfindung ist ein Verfahren zur Herstellung dieses Alkydharzes, wonach man die Ausgangskomponenten für die Herstellung des Alkydharzes oder die Alkydharzvorstufe zusammen mit so viel ε-Caprolactam, daß das fertige Alkydharz dann 3—20 Gew.-% einkondensierter ε-Caprolactamreste enthält, auf Temperaturen von 150—260°C, vorzugsweise 180—220°C, solange erhitzt, bis kein freies Lactam mehr nachweisbar ist.

Ein weiterer Gegenstand der Erfindung ist die Verwendung des oben bezeichneten Akydharzes als Lackbindemittel.

Die tatsächliche Umsetzung des ε-Caprolactams mit den restlichen Harzkomponenten zum caprolactamresthaltigen Alkydharz wurde durch unsere Feststellung gesichert, daß unter Reacktionsbedingungen von 20 bis weniger als 150°C keine ausreichende Wasserverdünnbarkeit des Alkydharzes erzielt wird. Erst Temperaturen von 150—260°C, vorzugsweise von 180—220°C, ergeben die Addukte.

Die erfindungsgemäßen Alkydharze lassen sich zu Lacken mit einem Festkörpergehalt von bis zu 60% verarbeiten, die bei 45 µm Trockenschichtdicke die für Malerlackbindemittel üblichen Trocknungszeiten erreichen (Staubtrocknung in 3—6 Std), die nicht nur die oben genannten guten Eigenschaften aufweisen, sondern außerdem auch zu Überzügen führen, die äußerst bew itterungsstabil sind.

Unter Alkydharzen versteht man durch Polykondensation nach bekannten Verfahren aus Alkoholen und Carbonsäuren hergestellte öl- bzw. fettsäuremodifizierte Polyester der Art, wie sie z.B. in Ullmanns Enzyklopädie der Technischen Chemie, 14. Bd, 3. Aufl., Urban & Schwarzenberg, München—Berlin 1963, S. 99—105, definiert oder in D. H. Solomon, The Chemistry of Organic Filmformers, S. 75—101, John Wiley & Sons. Inc., New York 1967, beschrieben sind.

Unter Öllänge des Alkydharzes versteht man — unabhängig davon, ob Öle oder ungesättigte Fettsäuren einkondensiert wurden — den Gehalt an Fettsäureresten, berechnet als Triglycerid, bezogen auf Alkydharz, wobei die Prozentangaben Gewichtsprozente bedeuten.

Für Synthese der Alkydharze bevorzugte Alkohole sind aliphatische, cycloaliphatische und/oder araliphatische Alkohole mit 1—6, vorzugsweise 1—4, an nichtaromatische C-Atome gebundenen OH-Gruppen und 1—16, vorzugsweise 2—6 C-Atomen pro Molekühle, z.B. Glykole wie Äthylenglykol, Propandiol-1.2, Propandiol-1.3, Butandiol-1.2, -1.3 und 1.4, Neopentylglykol, Hexandiol-1.2, -1.4 und 1.6, 2-Äthylpropandiol-1.3, Ätheralkohole wie Di- und Tri- äthyien- und propylenglykole, Adipinsäurebis- äthylenglykolester; oxäthylierte und perhydrierte Bisphenole; cycloaliphatische Diole wie Cyclohexandiol-1.2 und -1.4, Bis(hydroxymethyl)cyclohexan; Sorbit und Mannit; drei- und vierwertige Alkohole wie Trimethyloläthan und -propan, Glycerin, Pentaerythrit, 1.2.4-Butantriol, 1.2.6-Hexantriol; einwertige kettenabbrechende Alkohole mit 1—7 C-Atomen wie Benzylalkohol, Cyclohexanol, Propanol, Butanol, Besonders bevorzugte Alkohole sind Glycerin, Trimethylolpropan, Neopentylglykol und Pentaerythrit.

Für die Synthese der Alkydharze bevorzugte Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 2—14, vorzugsweise 4—12 C-Atomen pro Molekül oder deren veresterungsfähige Derivate (z.B. Anhydride oder Ester), z.B. Phthalsäureanhydrid, Isophthalsäure, Terephthalsäure, Tetrahydro- und Hexahydrophthalsäureanhydrid, Endomethylen-tetrahydrophthalsäure, Trimellitsäureanhydrid, Pyromellitsäureanhydrid, Maleinsäureanhydrid, Adipinsäure, Sebacinsäure und Bernsteinsäureanhydrid, Benzoesäure, p-tert-Butylbenzoesäure, Hexahydrobenzoesäure.

Für die Herstellung der Alkydharze bevorzugte Monocarbonsäuren sind aliphatische, cycloaliphatische gesättigte und ungesättigte und/oder aromatische Monocarbonsäuren mit 6—24 C-Atomen pro Molekül wie Benzolsäure, Butylbenzoesaure, Tolylsäure, Hexahydrobenzosäure, Abientinsäure, Milchsäure sowie Fettsäuren und Ester derselben wie Leinöl-, Sojaöl-, Holzöl-, Saffloröl-, Ricinenöl-, Ricinusöl-, Baumwollsaatöl-, Erdnußöl-, Perrillaöl- und Tallölfettsäure, die entweder als solche oder in Form ihrer Glycerinester (Triglyceride) eingesetzt werden können, wie z.B. Leinöl, Sojaöl, Holzöl, Saffloröl, Ricinusöl, Baumwollsaatöl, Erdnußöl, Perillaöl, Oiticicaöl, Tallöl, sowie aus natürlichen ungesättigten Ölen oder Fettsäuren durch Konjugierung oder Isomerisierung gewonnene Produkte.

Das als Zahlenmittel bestimmte Molekulargewicht der Alkydharze beträgt 2000—10.000 (bis zu Molekulargewichten von 5000 dampfdruckosmometrisch bestimmt in Dioxan und Aceton, wobei bei differierenden Werten der niedrigere Wert als korrekt angesehen wird; bei Molekulargewichten über 5000 membranosmometrisch bestimmt in Aceton).

Die Vernetzung der erfindungsgemäßen wasserverdünnbaren Alkydharze erfolgt durch Luftsauerstoff. Zur Erhöhung der Vernetzungsgeschwindigkeit können Trockenstoffe, sogenannte Sikkative, zugesetzt werden, die den Zerfall der gebildeten Hydroperoxide beschleunigen. Als solche seien die organischen Salze mehrwertiger Metalle wie die des Kobalt, Blei, Zirkon, Mangan, Eisen, Vanadium, Cer, und Calcium genannt. Darüber hinaus können diese Metalle auch in Form ihrer Oxide und Hydroxide sowie als wasserlösliche Salze anorganischer Säuren verwendet werden.

Neben den genannten Zusätzen können die wasserverdünnbaren Malerlacke die üblichen Zuschläge und Pigmente enthalten. Als Pigment können die in der Lackindustrie allgemein üblichen Pigmente wie Titandioxid, Eisenoxid, Chromoxid, Zinksulfit, Ruß, Aluminiumbronze sowie Füllstoffe wie Kieselsäure oder Sulfate eingesetzt werden.

Die Lacke können nach den üblichen Verfahren wie Spritzen, Streichen und Rollen auf die zu beschichtenden Gegenstände aufgetragen werden. Die in den nachfolgenden Beispielen genannten Teile bedeuten Gewichtsteile; Prozentangaben erfolgen als Angaben für Gewichtsprozente.

Beispiele

Vergleichsbeispiel

3132 Teile Sojaölfettsäure, 944,5 Teile Pentaerythrit und 785,5 Teile Phthalsäureanhydrid werden unter einer Stickstoffatmosphäre bei 220°C so lange verestert, bis eine Säurezahl von 5,0 erreicht wird; dann kühlt man auf 150°C ab und setzt mit 434,5 Teilen Tetrahydrophthalsäureanhydrid zum Halbester um, wobei eine Gesamtsäurezahl von 48 erhalten wird. Anschließend kühlt man auf 50°C ab und neutralisiert mit 7,6 Teilen (pro 100 Teile Harz) Dimethyläthanolamin. Nach dem Abkühlen auf Raumtemperatur gelingt es nicht, das erhaltene neutralisierte Alkydharz in Wasser zu lösen. Bei allen Konzentrationen wird eine homogene wäßrige Lösung nicht erhalten; es tritt sofort Phasentrennung ein.

Beispiel 1

Aus 3 257,7 Teilen Sojaölfettsäure, 864 Teilen Pentaerythrit und 782 Teilen Phthalsäureanhydrid wird — wie im Vergleichsbeispiel beschrieben — ein Alkydharz hergestellt. Nachdem Säurezahl 5.0 erreicht wird, kühlt man auf 200°C ab und fügt 238 Teile ε-Caprolactam hinzu und hält die Temperatur 4 Stunden lang. Anschließend wird abgekühlt und bei 150°C mit 151 Teilen Tetrahydrophthalsäure aufgesäuert, wobei eine Gesamtsäurezahl von 12,3 erhalten wird. Nach dem Abkühlen auf 50°C wird mit 1,95 Teilen (pro 100 Teile Harz) Dimethyläthanolamin neutralisiert und mit so viel Wasser verdünnt, daß eine homogene Lösung erhalten wird. Diese besitzt einen Festkörpergehalt von 25% und eine Viskosität entsprechend einer Auslaufzeit (DIN 53211) von 150 sek (DIN-4-Becher).

Beispiel 1 und das Vergleichsbeispiel zeigen, daß ein erfindungsgemäß mit ε-Caprolactam modifiziertes Alkydharz trotz deutlich geringerer Mengen Dimethyläthanolamin und Tetrahydrophthalsäure wasserlöslich ist, während das unmodifizierte Harz nicht mit Wasser verdünnt werden kann.

Anwendung

Aus dem Beispiel 1 hergestellten, mit ε-Caprolactam modifizierten Alkydharz wurde nach folgender Rezeptur ein weißpigmentierter Malerlack hergestellt.

| | |
|---|---|
| Bindemittel aus Bsp. 1, ca. 87% ig in Butylglykol, Säurezahl 25,0 | 35,30 |
| Dimethylethanolamin | 1,20 |
| Titandioxid, Rutiltyp | 30,00 |
| Antihautmittel | 0,20 |
| Cobalt-Sikkativ, 6% ig in Xylol | 0,40 |
| Wasser | 32,90 |
| | 100,00 |

Aus dem fertigen Lack wurden 40 $\mu$m starke Filme auf Stahlblech aufgetragen und zusammen mit einem Vergleichsmuster eines handelsüblichen konventionellen Malerlackbindemittels 600 Stunden in einem Weather-o-meter bewittert. Das erfindungsgemäße ε-Caprolactam-modifizierte Alkydharz aus Beispiel 1 erleidet in der Bewitterung keinesfalls schneller Glanzverlust als ein konventionelles Malerlackbindemittel.

Beispiel 2

2845,5 Teile Sojaölfettsäure, 921 Teile Pentaerythrit und 835,5 Teile Phthalsäureanhydrid werden unter Stickstoff bei 220°C so lange miteinander kondensiert, bis eine Säurezahl von 5,0 erreicht wird. Dann reduziert man die Temperatur auf 200°C und fügt 510 Teile ε-Caprolactam hinzu. Nach 4 Stunden Rühren bei dieser Temperatur kühlt man auf 150°C ab, säuert mit 172,2 Teilen Tetrahydrophthalsäureanhydrid auf und kühlt auf 50°C ab. Das Harz mit einer Gesamtsärezahl von 15,5 wird mit 2,46 Teilen/100 Teile Harz Dimethyläthanolamin neutralisiert und 45% ig in Wasser gelöst.

Beispiel 2 wurde wiederholt, indem Sojaölfettsäuren durch wechselnde Mengen ε-Caprolactam und Tetrahydrophthalsäureanhydrid ersetzt wurde. Die folgende Tabelle zeigt wie die Wasserverdünnbarkeit von der Menge ε-Caprolactam abhängt.

| Versuch | A | B | C | D | E |
|---|---|---|---|---|---|
| Sojaölfettsäure [%] | 56,91 | 56,43 | 55,63 | 55,4 | 54,9 |
| ε-Caprolactam [%] | 10,2 | 7,6 | 5,0 | 2,5 | — |
| Tetrahydrophthalsäureanhydrid [%] | 3,4 | 6,8 | 10,1 | 13,4 | 16,6 |
| Max. Festgehalt [%] der wäßr. Lösung | 45 | 40 | 25 | 25 | 20 |
| Säurezahl | 15 | 25 | 38 | 53 | 62 |

**Patentansprüche**

1. Wasserverdünnbares Alkydharz mit einer Öllänge von 55—70%, dadurch gekennzeichnet, daß das Alkydharz 3—20 Gew.-%, bezogen auf Alkydharz, einkondensierte ε-Caprolactamreste enthält.

2. Verfahren zur Herstellung des Alkydharzes nach Anspruch 1, wonach man die Ausgangskomponenten für die Herstellung des Alkydharzes oder die Alkydharzvorstufe zusammen mit so viel ε-

**0 008 419**

Caprolactam, daß das fertige Alkydharz dann 3—20 Gew.-% einkondensierte ε-Caprolactamreste enthält, auf Temperaturen von 150—260°C so lange erhitzt, bis kein freies Lactam mehr nachweisbar ist.

3. Verwendung des Alkydharzes nach Anspruch 1 als Lackbindemittel.

**Revendications**

1. Résine alkyd pouvant être diluée à l'eau, ayant une longueur d'huile de 55 à 70%, caractérisée en ce qu'elle contient 3—20% en poids, par rapport à la résine alkyd, de restes d'epsilon-caprolactame incorporés par condensation.

2. Procédé de production de la résine alkyd suivant la revendication 1, selon lequel les composants de départ pour la production de la résine alkyd ou le progéniteur de résine alkyd sont chauffés ensemble avec une quantite suffisant d'epsilon-caprolactame pour que la résine alkyd finale contienne ensuite 3—20% en poids de restes d'epsilon-caprolactame incorporés par condensation, à des températures de 150—260°C jusqu'à ce qu'on ne puisse plus déceler de lactame libre.

3. Utilisation de la résine alkyd suivant la revendication 1 comme liant pour peinture.

**Claims**

1. A water-dilutable alkyd resin with an oil length of from 55 to 70%, characterised in that the alkyd resin contains from 3 to 20% by weight, based on the alkyd resin, of condensed ε-caprolactam radicals.

2. A process for the production of the alkyd resin according to claim 1, in which the starting components for the production of the alkyd resin or the alkyd resin precursor are heated, together with sufficient ε-caprolactam for the finished alkyd resin to contain from 3 to 20% by weight of condensed ε-caprolactam radicals to temperatures of from 150 to 260° until no more free lactam can be detected.

3. The use of the alkyd resin according to claim 1 as lacquer binders.